(19) Europäisches Patentamt
European Patent Office
Office européen des brevets

(11) **EP 3 486 984 A1**

## (12) EUROPEAN PATENT APPLICATION
published in accordance with Art. 153(4) EPC

(43) Date of publication:
**22.05.2019 Bulletin 2019/21**

(21) Application number: **17827475.9**

(22) Date of filing: **04.07.2017**

(51) Int Cl.:
*H01M 4/96* (2006.01)          *D04H 1/4242* (2012.01)
*D04H 1/492* (2012.01)          *D06C 23/04* (2006.01)
*H01M 4/88* (2006.01)          *H01M 8/10* (2016.01)

(86) International application number:
**PCT/JP2017/024436**

(87) International publication number:
**WO 2018/012345 (18.01.2018 Gazette 2018/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **14.07.2016 JP 2016139221**

(71) Applicant: **Toray Industries, Inc.**
**Tokyo 103-8666 (JP)**

(72) Inventors:
• **KAJIWARA, Kentaro**
**Otsu-shi**
**Shiga 520-8558 (JP)**

• **SHIMOYAMA, Satoru**
**Otsu-shi**
**Shiga 520-8558 (JP)**
• **WATANABE, Fumitaka**
**Otsu-shi**
**Shiga 520-8558 (JP)**
• **TANIMURA, Yasuaki**
**Otsu-shi**
**Shiga 520-8558 (JP)**

(74) Representative: **Mewburn Ellis LLP**
**City Tower**
**40 Basinghall Street**
**London EC2V 5DE (GB)**

(54) **GAS DIFFUSION ELECTRODE BASE MATERIAL, METHOD FOR PRODUCING SAME, GAS DIFFUSION ELECTRODE, MEMBRANE ELECTRODE ASSEMBLY AND SOLID POLYMER FUEL CELL**

(57) The purpose of the present invention is to improve water drainage performance of a gas diffusion electrode including a carbon fiber nonwoven fabric. The present invention provides a gas diffusion electrode base material essentially consisting of a carbon fiber nonwoven fabric, wherein the carbon fiber nonwoven fabric has an in-plane basis weight pattern in which high basis weight regions having a relatively high basis weight and low basis weight regions having a relatively low basis weight are arranged, and the carbon fiber nonwoven fabric has on at least one surface an uneven pattern in which recesses and projections are arranged, the uneven pattern being formed independently of the basis weight pattern.

**EP 3 486 984 A1**

**Description**

TECHNICAL FIELD

The present invention relates to a gas diffusion electrode base material for a solid polymer fuel cell, and a method for producing the gas diffusion electrode base material.

BACKGROUND ART

Solid polymer fuel cells have a low environmental load and high power generation efficiency, and are therefore expected to be increasingly applied in automobiles etc. which are large in number, and require a small size and high power.

In a fuel cell, the wet state of ionomers of electrolyte membranes and catalyst layers are maintained with moisture added to supplied hydrogen and air, and water generated by reaction, and excess water should be quickly drained to a channel so as not to hinder transportation of hydrogen and air.

As a base material that performs a function for meeting the above-mentioned requirement, carbon paper obtained by forming shortly-cut carbon fibers into a sheet by a papermaking method, fixing the sheet with a binding resin, and then carbonizing and graphitizing the sheet is widely used. Further, an attempt has been made to improve water drainage by a method in which carbon paper is subjected to hydrophobic treatment with a fluororesin or the like, or a method in which a microporous layer composed of a fluororesin and electrically conductive particles is formed on carbon paper.

As another approach to improve water drainage performance of the gas diffusion electrode, use of a carbon fiber nonwoven fabric, in which carbon fibers are mutually entangled, as a gas diffusion electrode base material has been considered rather than forming carbon fibers into a sheet by a papermaking method.

For example, Patent Document 1 discloses a gas diffusion electrode base material in which carbon fiber precursor fibers are mutually entangled, and calender-pressed to be structurally fixed, so that the amount of a binding resin used for fixing is considerably reduced, gas diffusibility and water drainage performance are improved.

In addition, Patent Documents 2 and 3 disclose a gas diffusion electrode base material with grooves and non-through-holes formed in a sheet in which carbon fiber precursor fibers are mutually entangled.

PRIOR ART DOCUMENTS

PATENT DOCUMENTS

Patent document 1: National Publication of International Patent Application No. 2004-511672
Patent Document 2: Japanese Patent Laid-open Publication No. 2003-17076
Patent Document 3: Japanese Patent Laid-open No. 2015-143404

SUMMARY OF THE INVENTION

PROBLEMS TO BE SOLVED BY THE INVENTION

A technique in which carbon fiber precursor fibers are mutually entangled as described in Patent Document 1 facilitates permeation of gas and water by preventing use of a binder resin. Further, in a gas diffusion electrode base material provided with grooves and non-through-holes as described in Patent Documents 2 and 3, drainage of water in a planar direction on a surface of the base material, so that supply of gas is hardly hindered.

In particular, when unevenness is formed by embossing at the stage of carbon fiber precursor fibers (e.g. flameproof thread) as in Patent Document 3, the pore diameter immediately under recesses decreases, so that the water permeation pressure increases, and therefore it is difficult for water to exist immediately under recesses. Thus, water moves through the surface to projections having a large pore diameter to be drained outside the surface from the top portions of the projections.

On the other hand, for popularizing fuel cells and expanding the range of application of fuel cells, downsizing by increasing the power density is an important issue. As the increase in power density progresses, the amount of water generated in power generation increases, and therefore it is expected that contribution of closure of a gas flow path to power generation performance will increase, so that further improvement of water drainage performance of the gas diffusion electrode base material is desired.

An object of the present invention is to further improve water drainage performance in a gas diffusion electrode including a carbon fiber nonwoven fabric.

SOLUTIONS TO THE PROBLEMS

For making it easier for water to move from a portion with a small pore diameter to a portion with a large pore diameter in the surface of a gas diffusion electrode base material, it is effective to change the pore diameter as continuously as possible. However, there is a limit to refinement of embossing, and therefore it is difficult to form a fine pore diameter distribution by embossing. In the present invention, further a pore diameter is made to have a further distribution by forming an in-plane basis weight pattern in which high basis weight regions having a relatively high basis weight and low basis weight regions having a relatively low basis weight are arranged.

That is, the present invention provides a gas diffusion electrode base material essentially consisting of a carbon fiber nonwoven fabric, wherein the carbon fiber nonwoven fabric has an in-plane basis weight pattern in which high basis weight regions having a relatively high basis weight and low basis weight regions having a relatively low basis weight are arranged, and the carbon fiber nonwoven fabric has on at least one surface an uneven pattern in which recesses and projections are arranged, the uneven pattern being formed independently of the basis weight pattern.

EFFECTS OF THE INVENTION

In a gas diffusion electrode base material of the present invention, water easily moves in an in-plane direction, so that water is favorably drained from the gas diffusion electrode base material, and a reaction gas is favorably supplied to a catalyst layer.

EMBODIMENTS OF THE INVENTION

<Gas diffusion electrode base material>

[Carbon fiber nonwoven fabric]

A gas diffusion electrode base material of the present invention essentially consists of a carbon fiber nonwoven fabric. The gas diffusion electrode base material essentially consisting of a carbon fiber nonwoven fabric may be a gas diffusion electrode base material including only a carbon fiber nonwoven fabric, but may be a gas diffusion electrode base material subjected to additional modification which does not hinder a function as a gas diffusion electrode, such as a gas diffusion electrode base material which contains a hydrophobic agent as described later, or which is provided with a microporous layer.

The carbon fiber nonwoven fabric is one obtained by heating a carbon fiber precursor fiber nonwoven fabric in an inert gas atmosphere to carbonize the carbon fiber precursor fiber nonwoven fabric. Here, the nonwoven fabric is one in which constituent fibers of a web are fixed by a method such as mechanical entanglement, welding by heating, or bonding with a binder. In addition, the web is a sheet obtained by laminating carbon fiber precursor fibers. The carbon fiber precursor fiber will be described later.

The carbon fiber nonwoven fabric that forms the gas diffusion electrode base material is preferably one including carbon fibers having a fiber length of more than 3 mm. When the fiber length is more than 3 mm, the carbon fibers that form a wall surface of the unevenness as described later are easily oriented in a thickness direction, so that the electrical conductivity of the electrode in a thickness direction can be improved. The fiber length of the carbon fiber is more preferably more than 10 mm. The upper limit of the fiber length is not particularly limited, but is preferably 100 mm or less in general. In addition, in the present invention, the fiber length means a number average fiber length.

When the fiber diameter of carbon fiber that forms the carbon fiber nonwoven fabric decreases, the surface area at the same basis weight increases, so that a carbon fiber nonwoven fabric excellent in electrical conductivity and thermal conductivity is obtained, but handling becomes difficult. Thus, the fiber diameter of the carbon fiber is preferably 3 to 30 $\mu$m, more preferably 5 to 20 $\mu$m.

The average pore diameter of the carbon fiber nonwoven fabric is preferably 20 $\mu$m or more, more preferably 25 $\mu$m or more, still more preferably 30 $\mu$m or more. The upper limit of the average pore diameter is not particularly limited, but is preferably 80 $\mu$m or less, more preferably 70 $\mu$m or less. If the average pore diameter is 20 $\mu$m or more, high performance is obtained in terms of diffusion of gas and water drainage. In addition, when the average pore diameter is 80 $\mu$m or less, drying-out is easily prevented. In the present invention, the average pore diameter of the carbon fiber nonwoven fabric refers to a value measured by a mercury press-in method. This can be measured using, for example, PoreMaster (manufactured by Quantachrome Instruments), and in the present invention, a value is calculated while the surface tension $\sigma$ of mercury is set to 480 dyn/cm and the contact angle between mercury and the carbon fiber nonwoven fabric is set to 140°.

In addition, the apparent density of the carbon fiber nonwoven fabric is preferably 0.10 to 1.00 $g/m^3$. When the apparent density is 0.10 $g/m^3$ or more, electrical conductivity and thermal conductivity can be improved, and the structure is hard to be ruptured by a pressure which is applied at the time of using the carbon fiber nonwoven fabric in a fuel cell. In addition, when the apparent density is 1.00 $g/m^3$ or less, gas or liquid permeability can be improved. The apparent density is more preferably 0.20 to 0.80 $g/cm^3$, still more preferably 0.25 to 0.60 $g/cm^3$. Here, the apparent density is a value obtained by dividing a basis weight by a thickness.

The basis weight of the entire carbon fiber nonwoven fabric is not particularly limited, but is preferably 15 $g/m^2$ or more, more preferably 20 $g/m^2$ or more. When the basis weight of the carbon fiber nonwoven fabric is 15 $g/m^2$ or more, mechanical strength is increased, so that conveyance performance in the production process can be improved. On the other hand, the basis weight is preferably 150 $g/m^2$ or less, more preferably 120 $g/m^2$ or less. When the basis weight is 150 $g/m^2$ or less, the gas permeability and diffusibility of the carbon fiber nonwoven fabric in the perpendicular-to-plane direction is further improved.

In addition, when a carbide is deposited as a binder at the contact point between carbon fibers, the contact area at the contact point between carbon fibers increases, so that electrical conductivity and thermal conductivity are improved, and therefore power generation efficiency is improved. Examples of the method for adding such a binder include a method in which a carbon fiber nonwoven fabric after carbonization is impregnated or sprayed with a binder solution, and heat-treated again under an inert gas atmosphere to carbonize a binder. Here, as the binder, thermosetting resins such as a phenol resin, an epoxy resin, a melamine resin and a furan resin can be used, and among them, a phenol resin having a high carbonization yield is especially preferable. In addition, a method is also preferable in which a thermoplastic resin is mixed in a carbon fiber precursor nonwoven fabric as described later. On the other hand, when a carbide is not deposited as a binder, there is an advantage that carbon fibers easily move, and therefore flexibility is improved, so that handling in the production process is facilitated.

In the present invention, the carbon fiber nonwoven fabric has an in-plane basis weight pattern in which high basis weight regions having a relatively high basis weight and low basis weight regions having a relatively low basis weight are arranged.

The carbon fiber nonwoven fabric can be confirmed to have a basis weight pattern in the following manner.

1. The carbon fiber nonwoven fabric is placed on a stage of an optical microscope, and the carbon fiber nonwoven fabric is photographed from the upper surface side with the carbon fiber nonwoven fabric irradiated with light vertically from the lower surface side. When the fiber density varies in the surface, the light transmittance varies, and therefore in light transmission observation image, a light-and-dark pattern is observed in which regions with a low fiber density are light, and regions with a high fiber density are dark. The image formed in this manner is hereinafter referred to as a "light transmission observation image". The optical intensity of light applied at the time of observation is appropriately adjusted so that a light-and-dark contrast is appears as described above, and when a light-and-dark pattern is not observed at any optical intensity, it is determined that there is no basis weight pattern.
2. The average value of the lightness of the entire light transmission observation image is calculated using image processing software, and the average value is defined as an average lightness. Here, the lightness is a numerical value expressed in 256 stages of 0 to 255 in an RGB color model. When a pattern such as a striped pattern, a checkered pattern or a dotted pattern appears in image processing performed so that a region with a higher lightness and a region with a lower lightness as compared to the average lightness can be distinguished by coloring or the like, it is determined that there is a basis weight pattern.

From the viewpoint of ease of formation, the basis weight pattern is preferably a regular pattern, i.e. a pattern in which a graphic such as a straight line, a curve line, a rectangle or a circle, which is defined by a boundary between the high basis weight region and the low basis weight region appears with certain regularity. In particular, the basis weight pattern is preferably a pattern in which striped high basis regions, i.e. linear high basis weight regions and likewise linear low-basis weight regions are alternately arranged. Here, the pitch of the striped basis weight pattern (distance between the center line of one high basis weight region and the center line of the adjacent high basis weight region) is preferably as small as possible because water easily moves in the in-plane direction. The pitch of the striped basis weight pattern is preferably 5 mm or less, more preferably 3 mm or less, still more preferably 2 mm or less. On the other hand, since it is difficult to form a basis weight pattern at a pitch lower than the fiber diameter of the carbon fiber, the pitch of the striped basis weight pattern is preferably 0.01 mm or more, more preferably 0.05 mm or more, still more preferably 0.1 mm or more. It is not necessary that the pitch be uniform over the entire surface, and the pitch can be appropriately adjusted according to operation conditions such as the size of a fuel cell, the form of a gas flow path, the temperature, the humidity and supply amount.

In the present invention, the carbon fiber nonwoven fabric that forms the gas diffusion electrode base material has on at least one surface an uneven pattern in which recesses and projections are arranged, the uneven pattern being formed independently of the basis weight pattern.

The carbon fiber nonwoven fabric can be confirmed to have an uneven pattern in the following manner.

1. The carbon fiber nonwoven fabric is observed with a laser microscope or the like with the concerned surface (surface to be judged for presence or absence of an uneven pattern) on the upper side, and a stereoscopic image in which unevenness is visualized is formed using a shape analysis application.
2. In the image of the carbon fiber nonwoven fabric in 1, a flat surface (reference surface) having a height equal to an average value of heights calculated by the shape analysis application is assumed, and image processing is performed in such a manner that a recess and a projection can be distinguished from each other where a portion above the reference surface is a projection, and a portion below the reference surface is a recess. When both the portion above the reference surface and the portion below the reference surface do not appear, it is determined that an unevenness is not formed.
4. When a pattern such as a striped pattern, a checkered pattern or a dotted pattern appears in the image processing, it is determined that there is an uneven pattern.

It is more preferable that the uneven pattern can be further confirmed by the following method.

1. The carbon fiber nonwoven fabric is observed with a laser microscope or the like with the concerned surface (surface to be judged for presence or absence of an uneven pattern) on the upper side, and a stereoscopic image in which unevenness is visualized is formed using a shape analysis application.
2. The thickness of the carbon fiber nonwoven fabric at the time of pressing the carbon fiber nonwoven fabric in a thickness direction at 1 MPa (hereinafter, referred to simply as "thickness in pressing") is determined.
3. In the stereoscopic image of the carbon fiber nonwoven fabric in 1, a flat surface (reference surface) present on the concerned surface side from a surface (lower surface) opposite to the concerned surface by a height equivalent to the thickness in pressing is assumed, and image processing is performed in such a manner that a recess and a projection can be distinguished from each other where a portion above the reference surface is a projection, and a portion below the reference surface is a recess. When both the portion above the reference surface and the portion below the reference surface do not appear, it is determined that an unevenness is not formed.
4. When a pattern such as a striped pattern, a checkered pattern or a dotted pattern appears in the image processing, it is determined that there is an uneven pattern.

In the present invention, the uneven pattern of the carbon fiber nonwoven fabric is formed independently of the basis weight pattern. In this specification, the uneven pattern being formed independently of the basis weight pattern means that in comparison of the basis weight pattern with the uneven pattern, the low basis weight region and the high basis weight region do not completely match the recess and the projection, respectively. That is, when the basis weight pattern and the uneven pattern are different from each other, e.g. the basis weight pattern is a striped pattern and the uneven pattern is a dotted pattern, or when the basis weight pattern and the uneven pattern are the same, but the sizes of the recesses and projections of the uneven pattern do not completely match the sizes of the low basis weight regions and the high basis weight regions of the basis weight pattern, respectively, and thus displacement occurs, it can be determined that the uneven pattern is formed independently of the basis weight pattern. In other words, a carbon fiber nonwoven fabric in which the basis weight pattern is developed exclusively by the presence of unevenness is not within the scope of the present invention. Such an uneven pattern can be added by forming recesses and projections by a method which does not involve cutting of a surface of the carbon fiber nonwoven fabric, such as a method in which embossing is performed before firing of the carbon fiber nonwoven fabric as described later.

The shape of the uneven pattern is not particularly limited, but is preferably a regular pattern, i.e. a pattern in which a graphic such as a straight line, a curve, a rectangle or a circle, which is defined by a boundary between the recess and the projection appears with certain regularity. In particularly, the uneven pattern is preferably a striped pattern (pattern in which linear recesses and linear projections are alternately arranged), a dotted pattern (shape in which projections are present in the form of islands with recesses as sea, or shape in which recesses are present in the form of islands with projections as sea), or a checkered pattern (a shape obtained in which substantially rectangular recesses and projections are alternately arranged). In the case of a dotted uneven pattern, it is preferable that dots composed of recesses and projections are formed so as to be substantially evenly distributed on a surface.

In the gas diffusion electrode of the present invention, typically water is drained from the gas diffusion base material at the surfaces of projections on a surface contacting a separator, and moves along the surfaces of projections to be drained outside the system. Thus, it is preferable that an opposite surface (catalyst layer-formed surface) at the same position in plan view as recesses on a surface contacting the separator is recessed because water collected in the recessed portion is easily drained from projections on the separator side. That is, in the carbon fiber nonwoven fabric, it is preferable that an opposite surface at the same position in plan view as projections on one surface is recessed.

As described above, in a fuel cell having the carbon fiber nonwoven fabric of the present invention as a gas diffusion electrode base material, water generated by reaction moves along the surfaces of projections to be drained rather than moving along recesses. When the uneven pattern has a striped shape, the projection formation pitch is preferably 5 mm or less, more preferably 3 mm or less, still more preferably 2 mm or less for exhibiting the above-mentioned water drainage effect. When the uneven pattern is a dotted pattern, the dot formation pitch is preferably 2 mm or less, more preferably 1 mm or less, still more preferably 0.5 mm or less in both longitudinal and lateral directions.

Further, when the uneven pattern is a dotted pattern, the dot formation density is preferably $30/cm^2$ to $5000/cm^2$, more preferably $100/cm^2$ to $1500/cm^2$. When the number of discontinuous protrusions is $30/cm^2$ or more, even relatively small water droplets easily move in a gas flow path having top surfaces of the discontinuous protrusions as a bottom surface, and when the number of discontinuous protrusions are $5000/cm^2$ or less, the interaction of the protrusions with water droplets is easily reduced. The number of protrusions is calculated by measuring the area occupied by 100 unevenness in a continuous region.

The height of unevenness of the uneven pattern is preferably 5 $\mu$m or more and 250 $\mu$m or less. When the height of the unevenness is in the above-mentioned range, it is possible to attain both uniformity of gas supply and water drainage performance while maintaining the strength of the carbon fiber nonwoven fabric. The height of unevenness of the uneven pattern is more preferably 200 $\mu$m or less, still more preferably 150 $\mu$m or less. In addition, from the viewpoint of securing water drainage performance, the height of unevenness is preferably 5% or more, more preferably 10% or more based on the thickness of the carbon fiber nonwoven fabric in pressing. The height of the unevenness of the carbon fiber sheet means a difference between the average height of projections and the average height of recesses, which is obtained by observing the carbon fiber nonwoven fabric, and performing calculation using a shape analysis application.

In addition, it is preferable that broken fibers are not observed on the wall surfaces of unevenness in plan view. When broken fibers are not present, high electrical conductivity is obtained. When the result of observation of the surface of the carbon fiber nonwoven fabric with an optical microscope, an electron microscope or the like shows that there are not carbon fibers disconnected at the wall surfaces of unevenness, it can be confirmed that broken fibers are not observed on the wall surfaces of unevenness. In the present invention, in the case of a dotted pattern, it is determined that broken fibers are not observed on the wall surfaces of unevenness when the result of observation of 20 or more adjacent recesses or projections shows that majority of the recesses or projections have no broken fibers on their wall surfaces. In addition, in the case of the striped pattern, it is determined that broken fibers are not observed on the wall surfaces of unevenness when the result of making an observation over a length of 5 mm in a straight-line direction in linear projections shows that there are 10 or less broken fibers on the wall surfaced of unevenness. The number of such broken fibers is preferably 5 or less, more preferably 3 or less.

In addition, it is preferable that at least some of the carbon fibers that form the wall surfaces of unevenness is oriented in the height direction of the unevenness. The carbon fiber that forms the wall surface of the unevenness is a carbon fiber which is at least partially exposed on the wall surface of the unevenness. The orientation of the carbon fiber in the height direction of the unevenness means that when the unevenness is divided into three equal parts in the height direction, the carbon fiber extends through two equally dividing surfaces (flat surfaces parallel to the bottom surface of the carbon fiber nonwoven fabric). Generally, when unevenness is formed, a contact area with a member (e.g. separator) on the gas supply side is smaller as compared to a case where unevenness is not formed, so that electrical conductivity and thermal conductivity are deteriorated. However, carbon fibers have electrical conductivity and thermal conductivity higher in the fiber axis direction than in the fiber cross-section direction, and therefore when carbon fibers that form the wall surfaces of unevenness is oriented in the height direction of the unevenness, electrical conductivity and thermal conductivity in the thickness direction of the carbon fiber nonwoven fabric can be improved to compensate for deterioration of electrical conductivity and thermal conductivity due to formation of pores.

When the result of observation of the surface of the carbon fiber nonwoven fabric with a laser microscope or the like shows that there is a carbon fiber intersecting both the line of intersection between the equally dividing surface at a height 1/3 times the height of unevenness and the wall surface of the unevenness and the line of intersection between each equally dividing surface at a height 2/3 times the height of the unevenness and the wall surface of the unevenness in examination using a shape analysis application, it can be confirmed that there is a carbon fiber oriented in the height direction of the unevenness. In addition, when the result of observing any cross-section of the carbon fiber nonwoven fabric, which includes an unevenness, with a scanning electron microscope, and drawing two straight lines intersecting the unevenness at positions corresponding to 1/3 and 2/3 times the height of the unevenness shows that there is a carbon fiber crossing both of the two straight lines, it can be confirmed that there is a carbon fiber oriented in the height direction of the unevenness. In the case of such a dotted pattern, the number of such carbon fibers present in one recess or projection is preferably 2 or more, more preferably 5 or more. In the case of a striped pattern, the number of such carbon fibers present in observation of a linear unevenness over a length of 1 mm is preferably 2 or more, more preferably 5 or more.

In addition, since the uneven pattern has recesses formed over the boundary line between the low basis weight region and the high basis weight region in the basis weight pattern, it is preferable that 10% or more of the total length of the boundary line between the low basis weight region and the high basis weight region overlaps recesses in plan view because regions with a variety of pore diameters can be formed in the in-plane direction in the recesses, so that movement of water in the in-plane direction can be promoted. Preferably 30% or more, more preferably 50% or more of the boundary line between the low basis weight region and the high basis weight region overlaps recesses.

When the thickness of the gas diffusion electrode base material increases, the size of a fuel cell increases, and therefore the gas diffusion electrode base material is preferably thin as long as its function is exhibited. The thickness of the gas diffusion electrode base material is generally about 30 $\mu$m to 500 $\mu$m. In the present invention, the thickness of the gas diffusion electrode base material is preferably 300 $\mu$m or less, more preferably 250 $\mu$m or less, still more preferably 200 $\mu$m or less. In addition, the thickness of the gas diffusion electrode base material is more preferably 50 $\mu$m or more, still more preferably 70 $\mu$m or more. When the thickness of the gas diffusion electrode base material is 50 $\mu$m or more, gas diffusion in the in-plane direction is further improved, so that gas can be easily supplied to a catalyst under a rib of a separator, resulting in further improvement of power generation performance at either a low temperature or a high temperature. On the other hand, when the thickness of the gas diffusion electrode base material is 300 $\mu$m or less, the gas diffusion path and the water drainage path are shortened, electrically conductivity and thermal conductivity can be increased, so that power generation performance is further improved at either a low temperature or a high temperature. In the present invention, the thickness of the gas diffusion electrode base material is a thickness measured with a surface pressure of 0.15 MPa applied to an area of $\phi$ 5 mm or more. In addition, the thickness of the gas diffusion electrode base material provided with a microporous layer as described later means a thickness including the thickness of the microporous layer.

[Hydrophobic agent]

In general, the gas flow path of the gas diffusion electrode base material is often subjected to hydrophilic treatment for ensuring that supply of gas is not hindered. On the other hand, in the gas diffusion electrode base material of the present invention, it is preferable to further add a hydrophobic agent to the above-mentioned carbon fiber nonwoven fabric for reducing resistance to movement of water at the top of discontinuous protrusions. As a hydrophobic agent, a fluorine-based polymer is preferably used because it is excellent in corrosion resistance. Examples of the fluorine-based polymer include polytetrafluoroethylene (PTFE), tetrafluoroethylene-hexafluoropropylene copolymers (FEP) and tetrafluoroethylene-perfluoroalkylvinylether copolymers (PFA) .

In general, when the contact angle is more than 120° when 10 $\mu$L of a water droplet is placed on the surface of the carbon fiber nonwoven fabric, it is determined that a hydrophobic agent has been added. In addition, when a fluorine-based polymer is used as a hydrophobic agent, addition of a hydrophobic agent can be confirmed by confirming presence of fluorine atoms on the surface of the fiber that forms the carbon fiber nonwoven fabric by X-ray spectroscopy, or detecting fluorocarbon by TG-MS in which thermogravimetry is combined with mass measurement.

The content of the hydrophobic agent in the gas diffusion electrode base material is not particularly limited, but is preferably 1% by mass to 20% by mass, more preferably 3% by mass to 10% by mass based on the amount of the carbon fiber nonwoven fabric.

In addition, the hydrophobic material may contain other additives. For example, it is preferable that the hydrophobic agent contains electrically conductive carbon particles because it is possible to attain both hydrophobicity and electrical conductivity.

[Microporous layer]

The gas diffusion electrode base material of the present invention may further include a microporous layer on the surface of the carbon fiber nonwoven fabric. The microporous layer is a carbon material-containing layer that is formed on a surface contacting a catalyst layer in the gas diffusion electrode (uneven pattern-non-formed surface in the case of a carbon fiber nonwoven fabric having a uneven pattern on one side). The microporous layer suppresses flooding by promoting elimination of water from a gap between the catalyst layer and the carbon fiber nonwoven fabric, and promotes reverse diffusion of moisture into the electrolyte membrane to suppress drying-up.

Examples of the carbon material that forms the microporous layer include carbon blacks such as furnace black, acetylene black, lamp black and thermal black, scaley graphite, scale-like graphite, earthy graphite, artificial graphite, expanded graphite and thin graphite. In addition, linear carbon materials such as vapor phase growth carbon fibers, single-walled carbon nanotubes, double-walled carbon nanotubes, multiwalled carbon nanotubes, carbon nanohorns, carbon nanocoils, cup-laminated carbon nanotubes, bamboo-like carbon nanotubes and graphite nanofibers are preferably used.

In addition, for promoting drainage of liquid water, it is preferable that the microporous layer contains a hydrophobic agent. Preferably, a fluorine-based polymer having high corrosion resistance is used as the hydrophobic agent. Examples of the fluorine-based polymer include polytetrafluoroethylene (PTFE), tetrafluoroethylene-hexafluoropropylene copolymers (FEP) and tetrafluoroethylene-perfluoroalkylvinylether copolymers (PFA) .

The void content of the microporous layer is preferably in the range of 60 to 85%, more preferably in the range of 65 to 80%, further preferably in the range of 70 to 75%. When the void content is 60% or more, drainage is further improved, so that flooding can be further suppressed. In addition, when the void content is 85% or less, water vapor diffusibility is further reduced, so that drying-up can be further suppressed. Here, the void content of the microporous layer is obtained by preparing a sample for cross-section observation using an ion beam cross-section processor, taking a picture with the cross-section magnified by a factor of 1000 or more using a microscope such as a scanning electron microscope, measuring the area of void parts, and determining the ratio of the area of the void parts to the observation area.

A microporous layer having a void content in the above-mentioned range is obtained by controlling the basis weight of the microporous layer, the blending amount of the carbon material with respect to the hydrophobic agent and other materials, the type of the carbon material and the thickness of the microporous layer. Particularly, it is effective to control the blending amount of the carbon material with respect to the hydrophobic agent and other materials, and the type of the carbon material. A microporous layer having a high void content is obtained by increasing the blending amount of the carbon material with respect to the hydrophobic agent and other materials, and a microporous layer having a low void content is obtained by decreasing the blending amount of the carbon material with respect to the hydrophobic agent and other materials.

The basis weight of the microporous layer is preferably in the range of 10 to 35 g/m$^2$. When the basis weight of the microporous layer is 10 g/m$^2$ or more, the surface of the carbon fiber nonwoven fabric can be reliably covered, and reverse diffusion of generated water is promoted. In addition, when the basis weight of the microporous layer is 35 g/m$^2$ or less, closing of recesses and voids is suppressed, so that drainage performance is further improved. The basis weight of the microporous layer is more preferably 30 g/m$^2$ or less, still more preferably 25 g/m$^2$ or less. In addition, the basis weight of the microporous layer is more preferably 14 g/m$^2$ or more, still more preferably 16 g/m$^2$ or more. In addition, the basis weight of the gas diffusion electrode base material of the present invention in which a microporous layer is formed is preferably 25 to 185 g/m$^2$.

Preferably, a part or the whole of the microporous layer penetrates into the carbon fiber nonwoven fabric main body because the electric resistance between the separator and the gas diffusion electrode can be reduced.

<Solid polymer fuel cell>

A gas diffusion electrode can be obtained by forming a catalyst layer on the gas diffusion electrode base material of the present invention. Preferably, the catalyst layer includes porous carbon particles in which a transition metal, particularly platinum or an alloy thereof, is supported on the surface as a catalyst metal. When a microporous layer is present, the catalyst layer is formed on the surface of the microporous layer. In addition, when the uneven pattern is formed on only one surface, the catalyst layer is formed on a uneven pattern-non-formed surface.

In addition, the catalyst layer is formed on both sides of the polymer electrolyte membrane, a gas diffusion electrode using the gas diffusion electrode base material of the present invention is disposed outside the catalyst layer, and bonded, or the gas diffusion electrode of the present invention with the catalyst layer formed on the gas diffusion electrode base material is disposed on both sides of the polymer electrolyte membrane, and laminated, so that a membrane electrode assembly can be obtained. In addition, by disposing a separator on both sides of the membrane electrode assembly, one cell of the solid polymer fuel cell can be obtained.

<Method for producing gas diffusion electrode base material>

As an example, the gas diffusion electrode base material of the present invention can be produced by a method for producing a gas diffusion electrode base material, the method including: a step A of applying a water flow to a web including carbon fiber precursor fibers to form an in-plane basis weight pattern in which high basis weight regions having a relatively high basis weight and low basis weight regions having a relatively low basis weight are arranged; a step B of forming an uneven pattern by pressing a surface of the carbon fiber precursor fiber nonwoven fabric obtained in the step A with a member having unevenness; and a step C of carbonizing the carbon fiber precursor fiber nonwoven fabric provided with the uneven pattern in the step B.

[Step A]

The step A is a step of applying a water flow to a web including carbon fiber precursor fibers to form an in-plane basis weight pattern in which high basis weight regions having a relatively high basis weight and low basis weight regions having a relatively low basis weight are arranged.

The carbon fiber precursor fiber is a fiber which is formed into a carbon fiber by carbonization, and it is preferably a fiber having a carbonization ratio of 15% or more, more preferably a fiber having a carbonization ratio of 30% or more. The carbon fiber precursor fibers for use in the present invention are not particularly limited, and examples thereof include polyacrylonitrile (PAN)-based fibers, pitch-based fibers, lignin-based fibers, polyacetylene-based fibers, polyethylene-based fibers, fibers obtained by infusibilizing these fibers, polyvinyl alcohol-based fibers, cellulose-based fibers and polybenzoxazole-based fibers. Among them, PAN-based flameproof fibers obtained by infusibilizing PAN having high strength elongation and satisfactory processability are especially preferably used. The fibers may be infusibilized either before or after preparation of a nonwoven fabric, but it is preferable to infusibilize the fibers before they are formed into a sheet because an infusibilization treatment is easily uniformly controlled. When a carbon fiber precursor fiber nonwoven fabric which is not infusibilized is used, infusibilization treatment can be performed after the later-described step B, but it is preferable to subject the infusibilized carbon fiber precursor fiber nonwoven fabric to the step B for minimizing uneven deformation in the step C.

The carbonization ratio can be determined from the following equation.

```
carbonization ratio (%) = weight after carbonization/weight

before carbonization × 100
```

As the web, a dry parallel laid web or cross laid web, an air laid web, a wet web made by a papermaking process, a spunbond web made by an extrusion method, a melt-blown web, a web made by electrospinning or a web made by centrifugal spinning can be used. When PAN-based fibers prepared in a solution spinning method are infusibilized and formed into a web, use of a dry web or a wet web is preferable because a uniform sheet is easily obtained. In addition, a sheet obtained by mechanically entangling dry webs is especially preferable because shape stability in the steps is easily secured.

Since the carbon fiber nonwoven fabric is excellent in electrical conductivity and thermal conductivity when a carbide is deposited at an intersection of carbon fibers in the carbon fiber nonwoven fabric, the carbon fiber precursor fiber nonwoven fabric may be one containing a binder. The method for including a binder in the carbon fiber precursor fiber nonwoven fabric is not particularly limited, and examples thereof include a method in which the carbon fiber precursor fiber nonwoven fabric is impregnated or sprayed with a binder solution, and a method in which thermoplastic resin fibers serving as a binder are mixed in the carbon fiber precursor fiber nonwoven fabric beforehand.

On the other hand, since when a carbide is not deposited as a binder, there is an advantage that carbon fibers easily move, and therefore flexibility is improved, so that handling in the production process is facilitated, it is also preferable that the binder is not included, or the binder is not carbonized.

The specific method for forming a basis weight pattern by applying a water flow to a web including carbon fiber precursor fibers is not particularly limited, but it is preferable to perform water jet punching in which while a web is held in the form of a support, a plurality of nozzles are arranged in a direction perpendicular to the surface of the web, and water is continuously or intermittently jetted from the nozzles. According to this method, carbon fibers are thrusted to a planar direction by a water flow, the thrusted portions form low basis weight regions, and other portions form high basis weight regions. In addition, a striped basis weight pattern is obtained by continuously jetting the water flow, and a dotted or checkered basis weight pattern is obtained by intermittently jetting the water flow. It is especially preferable to set the method so that entanglement of carbon fiber precursor fibers proceeds in parallel to formation of a basis weight pattern by water jet punching.

In water jet punching, it is preferable that water is jetted in a columnar flow state from the viewpoint of energy transmission efficiency. The columnar flow can be normally generated by ejecting water at a pressure of 1 to 60 MPa from a nozzle with a diameter (diameter) of 60 to 1000 $\mu$m.

As the support, a woven or knitted fabric including filaments of a metal or a synthetic resin, or a plate-shaped article having a term is generally used. In general, the shape of the support is a conveyor shape or cylinder shape, and can also serve as a conveyance apparatus.

The amount and movement distance of fibers thrusted in the surface direction in application of a water flow varies depending on the shape and size of unevenness of the support, When the height difference of the unevenness of the support is large, the amount of movement of fibers is easily increased, and when the formation pitch of the unevenness on the support is large, fibers are considerably easily moved.

As one aspect of water jet punching, mention is made of an aspect in which a web held on a smooth support having small irregularities stemming from intersections of filaments thrust fibers in the surface direction by a water flow. In this aspect, the diameter of the nozzle is preferably large, and therefore preferably 105 $\mu$m or more, more preferably 125 $\mu$m or more. On the other hand, when the diameter is small, the amount of water can be reduced, and a smooth surface can be easily obtained. Therefore, the diameter of the nozzle is preferably 200 $\mu$m or less, more preferably 180 $\mu$m or less. In addition, the hole interval of the nozzle is preferably 5 mm or less, more preferably 3 mm or less, still more preferably 1 mm or less. In addition, the mesh size of the support is preferably 30 or more, more preferably 50 or more, still more preferably 70 or more. In addition, the mesh size of the support is preferably 200 or less, more preferably 180 or less, still more preferably 160 or less.

As another aspect of water jet punching, mention is made of an aspect in which a web held on irregularities stemming from intersections of filaments thrust fibers in the thickness and surface directions from the intersections (projections) of the filaments to peripheral recesses by a water flow. Here, the diameter of the nozzle is preferably 55 μm or more, more preferably 65 μm or more. This is because when the diameter is large, there is no problem of nozzle clogging, so that stable treatment can be performed. In addition, the diameter is preferably 125 μm or less, more preferably 105 μm or less. In this aspect, the hole interval of the nozzle is preferably 2 mm or less, more preferably 1 mm or less, still more preferably 0.5 mm or less. The mesh size of the support is preferably 5 or more, more preferably 10 or more. In addition, the mesh size of the support is preferably 70 or less, more preferably 50 or less, still more preferably 30 or less.

The water flow pressure in water jet punching can be appropriately selected according to the basis weight of a nonwoven fabric to be treated, and it is preferable that the water flow pressure is increased as the basis weight becomes higher. The lower limit of the water flow pressure is preferably 10 MPa or more, more preferably 15 MPa or more. The upper limit of the water flow pressure is preferably 40 MPa or less, more preferably 35 MPa or less.

In order to change a pattern in which low basis weight regions are formed, a method can be carried out in which a nozzle head and the traveling direction of a conveyor and/or cylinder conveying a nonwoven fabric are relatively shifted in different directions, or water sprinkling treatment is performed with a wire net etc. inserted between a nonwoven fabric and a nozzle after entanglement.

Those skilled in the art will be able to appropriately set various conditions for the water jet punching according to a basis weight pattern to be formed. In addition, it is preferable that water jet punching is repeatedly performed a plurality of times as necessary.

[Step B]

The step B is a step of forming an uneven pattern by pressing a surface of the carbon fiber precursor fiber nonwoven fabric obtained in the step A with a member having unevenness.

The pressing method is not particularly limited as long as it is a method that does not cause a variation in basis weight due to, for example, cutting of carbon fiber precursor fibers or the like, and it is possible to use a method in which a shaping member having a reversed uneven pattern corresponding to an uneven pattern to be formed is pressed against the surface (embossing), a method in which the surface is pressed with a needle-like member, or the like.

In particular, a method by embossing is preferable. In this method, a part of the surface of the carbon fiber precursor fiber nonwoven fabric is physically inserted with a shaping member, so that unevenness can be formed without causing a variation in basis weight in the surface.

The height of unevenness on the surface of the shaping member is not particularly limited, but is preferably equal to or greater than the height of unevenness to be formed in the state of a gas diffusion electrode because the carbon fiber precursor fiber nonwoven fabric is easily shrunk in the later-described step C.

More specific means is not particularly limited, and examples thereof include a method in which continuous pressing is performed with an embossing roll provided with recess shapes corresponding to projections or projection shapes corresponding to recesses, and a flat roll, or a method in which batch pressing is performed with a plate provided with similar recess shapes, and flat plates. At the time of pressing, it is preferable to use a heated roll or plate so that the form is not restored (unevenness is eliminated) in carbonization in the later-described step C. The heating temperature at this time is preferably 200°C to 300°C, more preferably 220°C to 280°C from the viewpoint of the morphological stability of unevenness formed in the nonwoven fabric structure of carbon fiber precursor fibers. In addition, in an aspect that emphasizes productivity, the heating temperature is preferably 250°C to 350°C, and more preferably 270°C to 330°C.

In addition, it is also preferable to perform pressing with a roll or plate having no recesses before or after the step B for controlling the density and thickness of a gas diffusion electrode base material that is finally obtained.

Since it is preferable to deform a carbon fiber precursor fiber nonwoven fabric having a relatively low density for shaping discontinuous protrusions without causing a variation in basis weight, the apparent density of the carbon fiber precursor fiber nonwoven fabric before it is subjected to the step B is preferably 0.02 to 0.20 $g/cm^3$, more preferably 0.05 to 0.15 $g/cm^3$.

In addition, in the carbon fiber nonwoven fabric to be used for the gas diffusion electrode base material, the apparent density is preferably 0.20 $g/cm^3$ or more for obtaining excellent electrical conductivity and thermal conductivity, and the apparent density is preferably 0.80 $g/cm^3$ or less for obtaining excellent gas diffusibility. For that purpose, the apparent density of the carbon fiber precursor fiber nonwoven fabric immediately before the step C is preferably 0.20 to 0.80 $g/cm^3$. It is preferable that the apparent density of the carbon fiber precursor fiber nonwoven fabric is adjusted in parallel to embossing, but the apparent density may be adjusted by separately performing pressing with a flat roll or flat plate after addition of unevenness.

[Step C]

The step C is a step of carbonizing the carbon fiber precursor fiber nonwoven fabric obtained in the step B. A carbonization method is not particularly limited, and a known method in the field of carbon fiber materials can be used, but firing under an inert gas atmosphere is preferably used. In firing under an inert gas atmosphere, it is preferable to perform carbonization at 800°C or higher while an inert gas such as nitrogen or argon is supplied. The firing temperature is preferably 1500°C or higher, more preferably 1900°C or higher for easily obtaining excellent electrical conductivity and thermal conductivity. On the other hand, from the viewpoint of the operation cost for a heating furnace, the firing temperature is preferably 3000°C or lower.

Further, in the step C, it is preferable to reduce the area while carbonizing the carbon fiber precursor fiber nonwoven fabric. When the area is reduced in the step C, the density of a portion immediately under recesses formed on a surface on which the shaping member has been mounted in the step B increases, so that the high density portion slightly expands with reduction of the area, leading to generation of protrusions on an opposite surface at the same position in plan view as the recesses. That is, an opposite surface at the same position in plan view as projections on one surface is recessed. Therefore, in the step C, the area is reduced by preferably 3% or more, more preferably 5% or more, still more preferably 7% or more. Adjustment of the reduction ratio can be controlled by the degree of infusibilization and the degree of tension in the step.

When the carbon fiber precursor nonwoven fabric is formed of carbon fiber precursor fibers before infusibilization, it is preferable to carry out an infusibilization step before the step B. Such an infusibilization step is usually carried out in air at a temperature of 150 to 350°C for a treatment time of 10 to 100 minutes. In the case of PAN-based infusibilized fibers, it is preferable to set the density to fall within the range of 1.30 to 1.50 g/cm$^3$.

[Hydrophobic treatment step]

Preferably, a hydrophobic agent is added by applying the hydrophobic agent to the carbon fiber nonwoven fabric, and then performing heat treatment.

As a hydrophobic agent, a fluorine-based polymer is preferably used because it is excellent in corrosion resistance. Examples of the fluorine-based polymer include polytetrafluoroethylene (PTFE), tetrafluoroethylene-hexafluoropropylene copolymers (FEP) and tetrafluoroethylene-perfluoroalkylvinylether copolymers (PFA) .

The coating amount of the hydrophobic agent is preferably 1 to 50 parts by mass, more preferably 3 to 40 parts by mass based on 100 parts by mass of the carbon fiber nonwoven fabric. When the coating amount of the hydrophobic agent is 1 part by mass or more, the carbon fiber nonwoven fabric is excellent in water drainage performance. On the other hand, when the coating amount of the hydrophobic agent is 50 parts by mass or less, the carbon fiber nonwoven fabric is excellent in electrical conductivity.

[Microporous layer forming step]

A microporous layer may be further formed on the carbon fiber nonwoven fabric obtained by the above-described method.

A carbon material-containing carbon coating solution to be used for formation of the microporous layer may contain a dispersion medium such as water or an organic solvent, or contain a dispersion promoting agent such as a surfactant. Water is preferable as the dispersion medium, and it is more preferable to use a nonionic surfactant as the dispersion promoting agent. In addition, the carbon coating solution may contain various carbon materials other than carbon, and a hydrophobic agent.

As a method for applying the carbon coating solution, screen printing, rotary screen printing, spraying, intaglio printing, gravure printing, die coater coating, bar coating, blade coating or the like can be used.

In addition, it is preferable that after the carbon coating solution is applied to the carbon fiber nonwoven fabric, the coating solution is dried at a temperature of 80 to 120°C. Specifically, the coated product is put in a drier set at a temperature of 80 to 120°C, and dried for 5 to 30 minutes. The drying air amount may be appropriately determined, but rapid drying is not desirable because generation of very small cracks on the surface may be induced.

<Method for producing gas diffusion electrode>

A gas diffusion electrode can be obtained by further forming a catalyst layer on the gas diffusion electrode base material obtained by the above-described method. The catalyst layer can be formed in the following manner: carrier particles carrying catalyst metal particles formed of platinum or an alloy thereof and a catalyst slurry formed of an electrolyte such as Nafion are applied to the gas diffusion electrode base material by a printing method, a spraying method, an inkjet method, a die coating method, a transfer method or the like.

EXAMPLES

The data in the examples and comparative examples were measured by the following methods.

1. Determination of formation of unevenness

(1) The carbon fiber nonwoven fabric was observed with a laser microscope (VK-9710 manufactured by KEYENCE CORPORATION) with the concerned surface (surface to be judged for presence or absence of an uneven pattern) on the upper side, and a stereoscopic image in which unevenness were visualized was formed using a shape analysis application (VK-Analyzer Plus manufactured by KEYENCE CORPORATION).
(2) The thickness of the carbon fiber nonwoven fabric at the time of pressing the carbon fiber nonwoven fabric in a thickness direction at 1 MPa was determined.
(3) In the stereoscopic image of the carbon fiber nonwoven fabric in (1), a flat surface (reference surface) present on the concerned surface side from a surface (lower surface) opposite to the concerned surface by a height equivalent to the thickness in pressing was assumed, and image processing was performed in such a manner that a recess and a projection was distinguished from each other where a portion above the reference surface was a projection, and a portion below the reference surface was a recess. When both the portion above the reference surface and the portion below the reference surface did not appear, it was determined that an unevenness was not formed.

2. Determination of low basis weight region and high basis weight region

(1) The carbon fiber nonwoven fabric was placed on a stage of an optical microscope, and the carbon fiber nonwoven fabric was photographed from the upper surface side with the carbon fiber nonwoven fabric irradiated with light vertically from the lower surface side.
(2) The average value of the lightness of the entire light transmission observation image was calculated using image processing software, and the average value was defined as an average lightness. Here, the lightness is a numerical value expressed in 256 stages of 0 to 255 in an RGB color model. When a regular striped pattern appeared in image processing performed so that a region with a higher lightness and a region with a lower lightness as compared to the average lightness was distinguished by coloring or the like, it was determined that there was a basis weight pattern.

3. Overlap of boundary lines between low basis weight regions and high basis weight regions and recesses

(1) From the image observed in 2 above, the total length of boundary lines between low basis weight regions and high basis weight regions was measured.
(2) The images observed in 1 and 2 above were superimposed, the total length of boundary lines between low basis weight regions and high basis weight regions, with which recesses overlapped, was measured, and the ratio (in percent) of the measured value to the total length of boundary lines was calculated.

4. Presence or absence of broken fibers on wall surfaces of unevenness
When the result of observation with a scanning electron microscope showed that majority of 20 or more adjacent recesses had no broken fibers on the wall surfaces of the recesses, it was determined that there were no broken fibers.

5. Orientation of carbon fibers in height direction on wall surfaces of unevenness
Whether carbon fibers forming the wall surfaces of unevenness were oriented in the height direction of the unevenness was determined by observation with a laser microscope (VK-9710 manufactured by KEYENCE CORPORATION) and use of a shape analysis application (VK-Analyzer Plus manufactured by Keyence Corporation). When the result of observation of a visual field of 1000 $\mu$m $\times$ 1400 $\mu$m showed that there was at least one carbon fiber intersecting both the line of intersection between the equally dividing surface at a depth 1/3 times the depth of unevenness and the wall surface of the unevenness and the line of intersection between the equally dividing surface at a depth 2/3 times the depth of the unevenness and the wall surface of the unevenness, it was determined that there was a carbon fiber oriented in the height direction of the unevenness.

6. Power generation performance
A catalyst layer formed of platinum-carrying carbon and Nafion (amount of platinum: 0.4 mg/cm$^2$) was bonded to both surfaces of a fluorine-based electrolyte membrane Nafion XL (manufactured by E. I. du Pont de Nemours and Company) by hot pressing to prepare a catalyst layer-covered electrolyte membrane (CCM). A gas diffusion electrode base material prepared in each of examples and comparative examples was disposed on both surfaces of the CCM, and hot pressing was performed again to obtain a membrane electrode assembly (MEA). The MEA with a gasket (having a thickness equal to 80% of the thickness of the gas diffusion electrode base material) disposed on the periphery of the gas diffusion electrode was set in a single cell (25 cm$^2$, serpentine passage). Here, a surface provided with a microporous layer faced the MEA side.

The cell temperature and the dew point of hydrogen and air were 80°C, the flow rates of hydrogen and air were 1000 cc/min and 2500 cc/min, respectively, the gas outlet was opened (not compressed), power was generated at a current density of 1.5 A/cm$^2$, and the voltage at this time was defined as a voltage under a high-humidified condition.

[Example 1]

A PAN-based flameproof crimped thread was cut to a number average fiber length of 51 mm, and then formed into a web with a carding and cross-layering, and the web was then subjected to water jet punching (WJP) at a treatment rate of 10 m/min and a jet pressure of 20 MPa on the front and back sides alternatively (4 times in total) using a nozzle plate in which holes having a diameter of 0.14 mm were arranged at intervals of 0.8 mm.

One surface of the carbon fiber precursor fiber nonwoven fabric was embossed using a metallic flat roll, and a metallic embossing roll in which projections each having a square shape 300 μm on one side and a height of 70 μm were dispersively formed, and the pitch of the projection was 0.5 mm in both MD and CD. The heating temperature of the embossing roll and the flat roll was 290°C, the linear pressure was 50 kN/m, and the processing speed was 50 cm/min. The apparent density after embossing was 0.40 g/cm$^3$.

Next, firing was performed at 2400°C for 4 hours under an inert atmosphere to obtain a carbon fiber nonwoven fabric. The carbon fiber nonwoven fabric was observed with a laser microscope, and the result showed that an opposite surface at the same position in plan view as projections on a surface on which a shaping member was mounted was recessed on a surface on which the shaping member was not mounted. In addition, the carbon fiber nonwoven fabric was observed with transmitted light, and the result showed that continuous low basis weight regions and continuous high basis weight regions were formed.

The carbon fiber nonwoven fabric thus prepared was impregnated with an aqueous dispersion of PTFE adjusted to a solid content concentration of 3 wt%, in such a manner that the PTFE solid content deposition amount was 5 wt%, and the carbon fiber nonwoven fabric was dried at 130°C using a hot air dryer, and heated at 380°C for 10 minutes to perform hydrophobic treatment.

A microporous layer (MPL) was added to a surface of the carbon fiber nonwoven fabric subjected to hydrophobic treatment, on which the shaping member was not mounted. First, a coating solution was prepared by mixing acetylene black ("Denka Black" (registered trademark) manufactured by Denki Kagaku Kogyo Kabushiki Kaisha), a PTFE resin ("POLYFLON" (registered trademark) D-1E manufactured by Daikin Industries, Ltd.), a surfactant ("TRITON" (registered trademark) X-100 manufactured by Nacalai Tesque) and purified water at a ratio of acetylene black/PTFE resin/surfactant/purified water = 7.7 parts by mass/2.5 parts by mass/14 parts by mass/75.6 parts by mass. Thereafter, the coating solution was applied to the lower surface of the carbon fiber nonwoven fabric by a die coater, and heated and dried at 120°C for 10 minutes, and then sintering was performed at 380°C for 10 minutes to obtain a gas diffusion electrode base material.

[Example 2]

Except that firing was performed with the carbon fiber nonwoven fabric fixed in a frame prepared using a carbon plate, the same procedure as in Example 1 was carried out to obtain a gas diffusion electrode base material. Here, an opposite surface at the same position in plan view as projections on a surface on which a shaping member was mounted was not recessed on a surface on which the shaping member was not mounted.

[Example 3]

A carbon fiber precursor fiber nonwoven fabric obtained by performing WJP in the same manner as in Example 1 was calendered with two metallic flat rolls. The heating temperature of the flat roll was 290°C, the linear pressure was 50 kN/m, and the processing speed was 50 cm/min. The apparent density after embossing was 0.40 g/cm$^3$.

Next, firing was performed at 2400°C for 4 hours under an inert atmosphere to obtain a carbon fiber nonwoven fabric.

The carbon fiber nonwoven fabric thus prepared was impregnated with an aqueous dispersion of PTFE adjusted to a solid content concentration of 3 wt%, in such a manner that the PTFE solid content deposition amount was 5 wt%, and the carbon fiber nonwoven fabric was dried at 130°C using a hot air dryer, and heated at 380°C for 10 minutes to perform hydrophobic treatment.

Subsequently, one surface of the carbon fiber nonwoven fabric subjected to hydrophobic treatment was embossed using a metallic flat roll, and a metallic embossing roll in which projections each having a square shape 300 $\mu$m on one side and a height of 70 $\mu$m were dispersively formed, and the pitch of the projection was 0.5 mm in both MD and CD. The heating temperature of the embossing roll and the flat roll was 180°C, the linear pressure was 50 kN/m, and the processing speed was 50 cm/min.

The carbon fiber nonwoven fabric was observed with a laser microscope, and the result showed that an opposite surface at the same position in plan view as projections on a surface on which a shaping member was mounted was not recessed on a surface on which the shaping member was not mounted.

A microporous layer (MPL) was added to a surface of the carbon fiber nonwoven fabric subjected to hydrophobic treatment, on which the shaping member was not mounted. First, a coating solution was prepared by mixing acetylene black ("Denka Black" (registered trademark) manufactured by Denki Kagaku Kogyo Kabushiki Kaisha), a PTFE resin ("POLYFLON" (registered trademark) D-1E manufactured by Daikin Industries, Ltd.), a surfactant ("TRITON" (registered trademark) X-100 manufactured by Nacalai Tesque) and purified water at a ratio of acetylene black/PTFE resin/surfactant/purified water = 7.7 parts by mass/2.5 parts by mass/14 parts by mass/75.6 parts by mass. Thereafter, the coating solution was applied to the lower surface of the carbon fiber nonwoven fabric by a die coater, and heated and dried at 120°C for 10 minutes, and then sintering was performed at 380°C for 10 minutes to obtain a gas diffusion electrode base material.

[Example 4]

Except that a microporous layer was not formed, the same procedure as in Example 1 was carried out to obtain a gas diffusion electrode base material.

[Comparative Example 1]

Except that instead of embossing, press processing was performed using two flat rolls, the same procedure as in Example 1 was carried out to obtain a gas diffusion electrode base material.

[Comparative Example 2]

Except that a water flow was applied by performing water flow application treatment at a treatment rate of 10 m/min and a jet pressure of 10 MPa on the front and back sides alternatively (4 times in total) using a nozzle plate in which holes having a diameter of 0.10 mm were arranged at intervals of 0.6 mm, the same procedure as in Example 1 was carried out to obtain a gas diffusion electrode base material. Here, the gas diffusion electrode base material did not have a structure in which low basis weight regions and high basis weight regions were alternately arranged.

[Comparative Example 3]

Except that instead of application of a water flow, a nonwoven fabric was processed with a needle punch (NP), the same procedure as in Example 1 was carried out to obtain a gas diffusion electrode base material. Here, the gas diffusion electrode base material did not have a structure in which low basis weight regions and high basis weight regions were alternately arranged.

Production processes, base material configurations and power generation performance for the gas diffusion electrode base materials prepared in examples and comparative examples are shown in Table 1.

[Table 1]

| Examples/Comparative Examples | | Example 1 | Example 2 | Example 3 | Example 4 | Comparative Example 1 | Comparative Example 2 | Comparative Example 3 |
|---|---|---|---|---|---|---|---|---|
| Production process | Addition of basis weight pattern (WJP/NP) | WJP (20 MPa) | WJP (20 MPa) | WJP (20 MPa) | WJP (20 MPa) | WJP (20 MPa) | WJP (10 MPa) | NP |
| | Addition of irregularity pattern | Embossing | Embossing | Embossing | Embossing | - | Embossing | Embossing |
| Base material configuration | Basis weight pattern | Striped | Striped | Striped | Striped | Striped | - | - |
| | Irregularity pattern | Dotted | Dotted | Dotted | Dotted | - | Dotted | Dotted |
| | Recesses corresponding to projections | Present | Absent | Absent | Present | - | Present | Present |
| | Overlap of boundary lines between low basis weight regions and high basis weight regions and recesses | 45% | 45% | 45% | 45% | - | - | - |
| | Broken fiber on irregularity wall surface | Not observed | Not observed | Observed | Not observed | - | Not observed | Not observed |
| | Height direction oriented fiber on irregularity wall surface | Present | Present | Not present | Present | - | Present | Present |
| | Microporous layer | Present | Present | Present | Absent | Present | Present | Present |
| Power generation performance | | 0.45 | 0.4 | 0.38 | 0.36 | 0.23 | 0.28 | 0.31 |

EP 3 486 984 A1

**Claims**

1.  A gas diffusion electrode base material essentially consisting of a carbon fiber nonwoven fabric, wherein the carbon fiber nonwoven fabric has an in-plane basis weight pattern in which high basis weight regions having a relatively high basis weight and low basis weight regions having a relatively low basis weight are arranged, and the carbon fiber nonwoven fabric has on at least one surface an uneven pattern in which recesses and projections are arranged, the uneven pattern being formed independently of the basis weight pattern.

2.  The gas diffusion electrode base material according to claim 1, wherein in the uneven pattern, the recess is formed over a boundary line between the low basis weight region and the high basis weight region, and 10% or more of the total length of the boundary line between the low basis weight region and the high basis weight region overlaps the recess in plan view.

3.  The gas diffusion electrode base material according to claim 1 or 2, wherein at least one of the basis weight pattern and the uneven pattern is a regular pattern.

4.  The gas diffusion electrode base material according to claim 3, wherein the basis weight pattern and the uneven pattern are regular patterns.

5.  The gas diffusion electrode base material according to claim 3 or 4, wherein the basis weight pattern is a striped pattern.

6.  The gas diffusion electrode base material according to any one of claims 1 to 5, wherein an opposite surface at the same position in plan view as the projections on one surface is recessed.

7.  The gas diffusion electrode base material according to any one of claims 1 to 6, wherein broken fibers of carbon fibers are not observed on the wall surfaces of the unevenness in plan view.

8.  The gas diffusion electrode base material according to any one of claims 1 to 7, wherein at least some of carbon fibers that form the wall surfaces of unevenness is oriented in the height direction of the unevenness.

9.  The gas diffusion electrode base material according to any one of claims 1 to 8, further comprising a hydrophobic material.

10. The gas diffusion electrode base material according to any one of claims 1 to 9, further comprising a microporous layer on a surface of the gas diffusion electrode base material.

11. A gas diffusion electrode in which a catalyst layer is formed on a surface of the gas diffusion electrode base material according to any one of claims 1 to 10.

12. A membrane electrode assembly comprising a polymer electrolyte membrane, a catalyst layer, and the gas diffusion electrode base material according to any one of claims 1 to 10.

13. A polymer fuel cell obtained using the membrane electrode assembly according to claim 12.

14. A method for producing a gas diffusion electrode base material, the method comprising:

    a step A of applying a water flow to a web including carbon fiber precursor fibers to obtain a carbon fiber precursor fiber nonwoven fabric having an in-plane basis weight pattern in which high basis weight regions having a relatively high basis weight and low basis weight regions having a relatively low basis weight are arranged;
    a step B of forming an uneven pattern by pressing a surface of the carbon fiber precursor fiber nonwoven fabric obtained in the step A with a member having unevenness; and
    a step C of carbonizing the carbon fiber precursor fiber nonwoven fabric provided with the uneven pattern in the step B.

15. The method for producing a gas diffusion electrode base material according to claim 14, wherein in the step A, a water flow is applied to the web at a pressure of 15 MPa or more.

**EP 3 486 984 A1**

<table>
<tr><td colspan="2" align="center"><b>INTERNATIONAL SEARCH REPORT</b></td><td colspan="2">International application No.<br>PCT/JP2017/024436</td></tr>
</table>

**A. CLASSIFICATION OF SUBJECT MATTER**
*H01M4/96*(2006.01)i, *D04H1/4242*(2012.01)i, *D04H1/492*(2012.01)i, *D06C23/04* (2006.01)i, *H01M4/88*(2006.01)i, *H01M8/10*(2016.01)i

According to International Patent Classification (IPC) or to both national classification and IPC

**B. FIELDS SEARCHED**

Minimum documentation searched (classification system followed by classification symbols)
H01M4/96, D04H1/4242, D04H1/492, D06C23/04, H01M4/88, H01M8/10

Documentation searched other than minimum documentation to the extent that such documents are included in the fields searched
Jitsuyo Shinan Koho       1922–1996   Jitsuyo Shinan Toroku Koho   1996–2017
Kokai Jitsuyo Shinan Koho   1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | WO 2015/098530 A1  (Toray Industries, Inc.),<br>02 July 2015 (02.07.2015),<br>paragraphs [0001], [0022] to [0058], [0080]<br>& US 2016/0322646 A1<br>paragraphs [0001], [0026] to [0064], [0091] to [0092]<br>& EP 3088582 A1 | 1-3,7-13<br>4-6,14-15 |
| A | JP 2005-240224 A  (Toho Tenax Co., Ltd.),<br>08 September 2005 (08.09.2005),<br>paragraphs [0001] to [0008]<br>(Family: none) | 1-15 |
| A | JP 2012-204073 A  (Mitsubishi Rayon Co., Ltd.),<br>22 October 2012 (22.10.2012),<br>paragraphs [0076] to [0082]<br>(Family: none) | 14-15 |

☒ Further documents are listed in the continuation of Box C.     ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>18 August 2017 (18.08.17) | Date of mailing of the international search report<br>29 August 2017 (29.08.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2017/024436

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2008-027672 A  (Toyota Motor Corp.),<br>07 February 2008 (07.02.2008),<br>paragraphs [0051] to [0052]; fig. 3 to 4<br>(Family: none) | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004511672 A
- JP 2003017076 A
- JP 2015143404 A